# EUROPEAN PATENT APPLICATION

(11) **EP 4 576 690 A1**
(43) Date of publication of application: **25.06.2025**
(21) Application number: 22955412.6
(22) Date of filing: 19.08.2022
(51) Int. Cl.: H04L 27/00, H04W 28/12

(54) **BSR ENHANCED SCHEDULING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Dehns Germany Partnerschaft mbB
(86) International application number: PCT/CN2022/113743
(87) International publication number: WO 2024/036632

(57) **Abstract**

A BSR enhanced scheduling method and apparatus, a communication device, and a storage medium. The BSR enhanced scheduling method is executed by a network device, and comprises: sending configuration information, wherein the configuration information is used for instructing a UE to use a first type of BSR during reporting, and the first type of BSR is determined by extension of a second type of BSR.

## Description

### TECHNICAL FIELD

The disclosure relates to, but is not limited to, the field of wireless communication technology, and specifically to a scheduling method and a scheduling apparatus for buffer status report (BSR) enhancement, a communication device, and a storage medium.

### BACKGROUND

In the related art, an eXtended Reality (XR) service is one of service types that the 5G system is expected to support. The XR service include augmented reality (AR), virtual reality (VR) and/or cloud gaming, etc. In general, data for the XR service has a plurality of data flows, and the traffic volume is very high. The existing buffer status report (BSR) is no longer sufficient to carry the amount of data reported by user equipment (UE).

### SUMMARY

Embodiments of the disclosure provide a scheduling method and a scheduling apparatus for buffer status report (BSR) enhancement, a communication device, and a storage medium.

According to a first aspect of the embodiments of the disclosure, a scheduling method for BSR enhancement is provided. The method is executed by a base station, including: sending configuration information, in which the configuration information indicates a first type of BSR used by a user equipment (UE) for reporting; and the first type of BSR is determined by extension of a second type of BSR.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In some embodiments, sending the configuration information includes: sending the configuration information via a dedicated signaling, in which the dedicated signaling includes one of: a radio resource control (RRC) signaling, a media access control (MAC) signaling, or downlink control information (DCI).

In some embodiments, the configuration information indicates at least one of: the first type of BSR used by the UE for reporting being specific to each UE; the first type of BSR used by the UE for reporting being specific to each logical channel group (LCG); or the first type of BSR used by the UE for reporting being specific to each logical channel (LC).

In some embodiments, the method includes one of: determining that the first type of BSR is used for the LCG when reporting, based on the first type of BSR used for reporting being configured for any one LC in the LCG; determining that the first type of BSR is used for the LCG when reporting, based on the first type of BSR used for reporting being configured for a predefined LC in the LCG; or determining that the first type of BSR is used for the LCG when reporting, based on the first type of BSR used for reporting being configured for at least one LC in the LCG.

In some embodiments, the method includes: receiving auxiliary information, in which the auxiliary information indicates at least one of: whether the UE supports a capability to use the first type of BSR for reporting; or whether the UE expects to use the first type of BSR for reporting; and determining the configuration information based on the auxiliary information.

According to a second aspect of the embodiments of the disclosure, a scheduling method for BSR enhancement is provided. The method is executed by a UE, including: receiving configuration information, in which the configuration information indicates a first type of BSR used by the UE for reporting; and the first type of BSR is determined by extension of a second type of BSR.

In some embodiments, the method includes: using the first type of BSR for reporting based on the configuration information.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In some embodiments, receiving the configuration information includes: receiving the configuration information via a dedicated signaling, in which the dedicated signaling includes one of: an RRC signaling, an MAC signaling, or DCI.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

In some embodiments, using the first type of BSR for reporting based on the configuration information includes one of: determining that the first type of BSR is used based on each UE for reporting, based on the configuration information; determining that the first type of BSR is used based on each LCG for reporting, based on the configuration information; or determining that the first type of BSR is used based on each LC for reporting, based on the configuration information.

In some embodiments, determining that the first type of BSR is used based on each LCG for reporting, based on the configuration information includes one of: determining that the first type of BSR is used for the LCG when reporting, based on an indication of the configuration information that the first type of BSR used for reporting is configured by a base station for any one LC in the LCG; determining that the first type of BSR is used for the LCG when reporting, based on an indication of the configuration information that the first type of BSR used for reporting is configured by the base station for a predefined LC in the LCG; or determining that the first type of BSR is used for the LCG when reporting, based on an indication of the configuration information that the first type of BSR used for reporting is configured by the base station for at least one LC in the LCG.

In some embodiments, the method further includes: sending auxiliary information, in which the auxiliary information is used for a base station to determine the configuration information, and the auxiliary information includes at least one of: whether the UE supports a capability to use the first type of BSR for reporting; or whether the UE expects to use the first type of BSR for reporting.

According to a third aspect of the embodiments of the disclosure, a scheduling apparatus for BSR enhancement is provided. The apparatus includes: a first sending module, configured to send configuration information, in which the configuration information indicates a first type of BSR used by a UE for reporting; and the first type of BSR is determined by extension of a second type of BSR.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In some embodiments, the first sending module is configured to: send the configuration information via a dedicated signaling, in which the dedicated signaling includes one of: an RRC signaling, an MAC signaling, or DCI.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

In some embodiments, the apparatus includes a first processing module, configured to perform one of: determining that the first type of BSR is used for the LCG when reporting, based on the first type of BSR used for reporting being configured for any one LC in the LCG; determining that the first type of BSR is used for the LCG when reporting, based on the first type of BSR used for reporting being configured for a predefined LC in the LCG; determining that the first type of BSR is used for the LCG when reporting, based on the first type of BSR used for reporting being configured for at least one LC in the LCG; or determining that the first type of BSR is used for the LCG when reporting, based on the first type of BSR used for reporting being configured for the LCG.

In some embodiments, the apparatus includes a first receiving module, configured to: receive auxiliary information, in which the auxiliary information indicates at least one of: whether the UE supports a capability to use the first type of BSR for reporting; or whether the UE expects to use the first type of BSR for reporting; and a first determining module, configured to determine the configuration information based on the auxiliary information.

According to a fourth aspect of the embodiments of the disclosure, a scheduling apparatus for BSR enhancement is provided. The apparatus includes: a second receiving module, configured to receive configuration information, in which the configuration information indicates a first type of BSR used by a UE for reporting; and the first type of BSR is determined by extension of a second type of BSR.

In some embodiments, a second processing module is configured to: use the first type of BSR for reporting based on the configuration information.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In some embodiments, the second receiving module is configured to: receive the configuration information via a dedicated signaling, in which the dedicated signaling includes one of: an RRC signaling, an MAC signaling, or DCI.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

In some embodiments, the second processing module is configured to perform one of: determining that the first type of BSR is used based on each UE for reporting, based on the configuration information; determining that the first type of BSR is used based on each LCG for reporting, based on the configuration information; or determining that the first type of BSR is used based on each LC for reporting, based on the configuration information.

In some embodiments, the second processing module is configured to perform one of: determining that the first type of BSR is used for the LCG when reporting, based on an indication of the configuration information that the first type of BSR used for reporting is configured by a base station for any one LC in the LCG; determining that the first type of BSR is used for the LCG when reporting, based on an indication of the configuration information that the first type of BSR used for reporting is configured by the base station for a predefined LC in the LCG; or determining that the first type of BSR is used for the LCG when reporting, based on an indication of the configuration information that the first type of BSR used for reporting is configured by the base station for at least one LC in the LCG.

In some embodiments, the apparatus includes a second sending module, configured to send auxiliary information, in which the auxiliary information is used for a base station to determine the configuration information, and the auxiliary information includes at least one of: whether the UE supports a capability to use the first type of BSR for reporting; or whether the UE expects to use the first type of BSR for reporting.

According to a fifth aspect of the embodiments of the disclosure, a communication device is provided. The communication device includes: a processor; a memory storing instructions executable by the processor; in which the processor is configured to execute the executable instructions to implement a scheduling method for BSR enhancement of any embodiments of the disclosure.

According to a sixth aspect of the embodiments of the disclosure, a computer storage medium is provided. The computer storage medium stores a computer-executable program which, when executed by a processor, implements a scheduling method for BSR enhancement of any embodiments of the disclosure.

The technical solutions provided in embodiments of the disclosure may include the following beneficial effects. In embodiments of the disclosure, the base station sends the configuration information, in which the configuration information indicates the first type of BSR used by the UE for reporting; and the first type of BSR is determined by extension of the second type of BSR. In this way, the UE may be enabled to use the extended first type of BSR for reporting. And the extended first type of BSR may carry a relatively very large amount of data from the UE. Thus, in the first aspect, the BSR enhancement is realized. In the second aspect, the UE may be enabled to report a relatively large amount of data based on the extended first type of BSR, so as to improve the efficiency of the wireless communication and etc.

It should be understood that the above general description and the following detailed description are only exemplary and explanatory, and do not limit embodiments of the disclosure.

### BRIEF DESCRIPTION OF THE DRAWINGS

FIG. 1 is a schematic diagram illustrating a structure of a wireless communication system according to an example embodiment.
FIG. 2 is a schematic diagram illustrating a scheduling method for buffer status report (BSR) enhancement according to an example embodiment.
FIG. 3 is a schematic diagram illustrating a scheduling method for BSR enhancement according to an example embodiment.
FIG. 4 is a schematic diagram illustrating a scheduling method for BSR enhancement according to an example embodiment.
FIG. 5 is a schematic diagram illustrating a scheduling method for BSR enhancement according to an example embodiment.
FIG. 6 is a schematic diagram illustrating a scheduling method for BSR enhancement according to an example embodiment.
FIG. 7 is a schematic diagram illustrating a scheduling method for BSR enhancement according to an example embodiment.
FIG. 8 is a block diagram illustrating a scheduling apparatus for BSR enhancement according to an example embodiment.
FIG. 9 is a block diagram illustrating a scheduling apparatus for BSR enhancement according to an example embodiment.
FIG. 10 is a block diagram illustrating a UE according to an example embodiment.
FIG. 11 is a block diagram illustrating a base station according to an example embodiment.

### DETAILED DESCRIPTION

Reference will now be made in detail to the example embodiments, examples of which are illustrated in the accompanying drawings. When the following description refers to the drawings, unless otherwise indicated, the same numbers in different drawings represent the same or similar elements. The implementations described in the following exemplary embodiments do not represent all implementations consistent with the embodiments of the disclosure. Rather, they are merely examples of apparatuses and methods consistent with some aspects of the disclosure as recited in the accompanying claims.

Terms used in the embodiments of the disclosure are for the purpose of describing specific embodiments only, and are not intended to limit the embodiments of the disclosure. As used in the examples of this disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "upon" or "when" or "in response to determining".

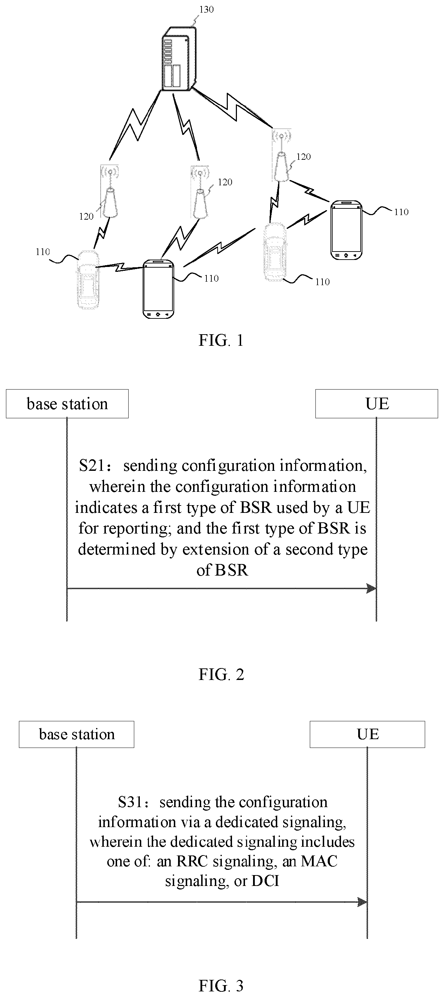

Please refer to FIG. 1, FIG. 1 illustrates a schematic diagram of a structure of a wireless communication system provided by an embodiment of the disclosure. As illustrates in FIG. 1, the wireless communication system is a communication system based on cellular mobile communication technology. The wireless communication system may include several user equipment (UEs) 110 and several base stations 120.

The UE 110 may be a device that provides voice and/or data connectivity to a user. The UE 110 may communicate with one or more core networks via a radio access network (RAN). The UE 110 may be an Internet of Things (IoT) UE, such as a sensor device, a mobile phone (or a "cellular" phone) and a computer having the IoT UE, which for example, may be a fixed, portable, pocket-sized, handheld, computer built-in, or vehicle-mounted device, for example, a station (STA), a subscriber unit, a subscriber station, a mobile station, a mobile, a remote station, an access point, a remote terminal, an access terminal, a user terminal, a user agent, a user device, or a UE. Alternatively, the UE 110 may be an unmanned aerial vehicle device. Alternatively, the UE 110 may be a vehicle-mounted device, such as, an electronic control unit (ECU) with a wireless communication function, or a wireless communication device externally connected to the ECU. Alternatively, the UE 110 may be a roadside device, e.g., may be a street lamp, a signal lamp, or other roadside devices, etc., with a wireless communication function.

The base station 120 may be a network-side device in the wireless communication system. The wireless communication system may be the 4th generation mobile communication (4G) system, also called as a long term evolution (LTE) system. Alternatively, the wireless communication system may also be a 5G system, also called as a new radio (NR) system or a 5G NR system. Alternatively, the wireless communication system may also be a next generation system of the 5G system. The access network in the 5G system may be referred to as a new generation-radio access network (NG-RAN).

The base station 120 may be an evolved base station (i.e., evolved NodeB, eNB) employed in the 4G system. Alternatively, the base station 120 may be a base station (e.g., gNB) employing a centralized distributed architecture in the 5G system. When the base station 120 adopts the centralized distributed architecture, the base station 120 generally includes a central unit (CU) and at least two distributed units (DU). The central unit is provided with protocol stacks for a packet data convergence protocol (PDCP) layer, a radio link control (RLC) protocol layer and a media access control (MAC) layer. The distributed unit is provided with protocol stacks for a physical (PHY) layer. Embodiments of the disclosure do not limit the specific implementation of the base station 120.

A wireless connection may be established between the base station 120 and the UE 110 through a radio interface or an air interface. In various embodiments, the radio interface may be a radio interface based on the 4th generation mobile communication network technology (4G) standard. Alternatively, the radio interface may be a radio interface based on a 5th generation mobile communication network technology (5G) standard, for example, the radio interface is a new radio. Alternatively, the radio interface may be a radio interface based on a further next-generation mobile communication network technology standard relative to 5G.

In some embodiments, an E2E (End to End) connection, for example, a V2V (vehicle to vehicle) communication, a V2I (vehicle to infrastructure) communication, and a V2P (vehicle to pedestrian) communication and other scenarios in vehicle to everything (V2X) communication, may also be established between the UEs 110.

In this case, the UE may be considered to be the terminal in the following embodiment.

In some embodiments, the wireless communication system described above may also include a network management device 130.

Several base stations 1200 are respectively connected to the network management device 130. The network management device 130 may be a core network device in the wireless communication system. For example, the network management device 130 may be a mobility management entity (MME) in an evolved packet core (EPC). Alternatively, the network management device may also be other core network devices, such as a serving gateway (SGW), a public data network gateway (PGW), a policy and charging rules function (PCRF), or a home subscriber server (HSS), etc. Embodiments of the disclosure do not define the implementation form of the network management device 130.

In order to facilitate the understanding of those skilled in the art, embodiments of the disclosure enumerate a plurality of implementations to provide a clear illustration for the technical solutions of embodiments of the disclosure. Those skilled in the art may understand that the plurality of embodiments provided in the embodiments of the disclosure may be performed individually, may be performed together with the methods of other embodiments in the embodiments of the disclosure in combination, or may be performed individually or in combination with a number of methods in other related art. The embodiments of the disclosure do not limit this.

It needs to be noted that when a plurality of executing subjects are involved in the embodiments of the disclosure, sending by one executing subject, a certain transmission to another executing subject, may refer to sending by the executing subject, the transmission directly to the other executing subject, or may refer to sending by the executing subject, the transmission to another executing subject via any other arbitrary device. The embodiments of the disclosure do not limit this.

In order to better understand the technical solutions described in any of the embodiments of the disclosure, the related art is first partially described.

In an embodiment, a buffer status report (BSR) may include a BSR with a buffer index of 5 bits and a BSR with a buffer index of 8 bits. As shown in Table 1, a table of the BSR with the buffer index of 5 bits is provided.

**Table 1**

| Index | BS value | Index | BS value | Index | BS value | Index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

As shown in Table 2, the BSR with the buffer index of 8 bits is provided.

**Table 2**

| Index | BS value | Index | BS value | Index | BS value | Index | BS value |
|---|---|---|---|---|---|---|---|
| 0 | 0 | 64 | ≤ 560 | 128 | ≤ 31342 | 192 | ≤ 1754595 |
| 1 | ≤ 10 | 65 | ≤ 597 | 129 | ≤ 33376 | 193 | ≤ 1868488 |
| 2 | ≤ 11 | 66 | ≤ 635 | 130 | ≤ 35543 | 194 | ≤ 1989774 |
| 3 | ≤ 12 | 67 | ≤ 677 | 131 | ≤ 37850 | 195 | ≤ 2118933 |
| 4 | ≤ 13 | 68 | ≤ 720 | 132 | ≤ 40307 | 196 | ≤ 2256475 |
| 5 | ≤ 14 | 69 | ≤ 767 | 133 | ≤ 42923 | 197 | ≤ 2402946 |
| 6 | ≤ 15 | 70 | ≤ 817 | 134 | ≤ 45709 | 198 | ≤ 2558924 |
| 7 | ≤ 16 | 71 | ≤ 870 | 135 | ≤ 48676 | 199 | ≤ 2725027 |
| 8 | ≤ 17 | 72 | ≤ 926 | 136 | ≤ 51836 | 200 | ≤ 2901912 |
| 9 | ≤ 18 | 73 | ≤ 987 | 137 | ≤ 55200 | 201 | ≤ 3090279 |
| 10 | ≤ 19 | 74 | ≤ 1051 | 138 | ≤ 58784 | 202 | ≤ 3290873 |
| 11 | ≤ 20 | 75 | ≤ 1119 | 139 | ≤ 62599 | 203 | ≤ 3504487 |
| 12 | ≤ 22 | 76 | ≤ 1191 | 140 | ≤ 66663 | 204 | ≤ 3731968 |
| 13 | ≤ 23 | 77 | ≤ 1269 | 141 | ≤ 70990 | 205 | ≤ 3974215 |
| 14 | ≤ 25 | 78 | ≤ 1351 | 142 | ≤ 75598 | 206 | ≤ 4232186 |
| 15 | ≤ 26 | 79 | ≤ 1439 | 143 | ≤ 80505 | 207 | ≤ 4506902 |
| 16 | ≤ 28 | 80 | ≤ 1532 | 144 | ≤ 85730 | 208 | ≤ 4799451 |
| 17 | ≤ 30 | 81 | ≤ 1631 | 145 | ≤ 91295 | 209 | ≤ 5110989 |
| 18 | ≤ 32 | 82 | ≤ 1737 | 146 | ≤ 97221 | 210 | ≤ 5442750 |
| 19 | ≤ 34 | 83 | ≤ 1850 | 147 | ≤ 103532 | 211 | ≤ 5796046 |
| 20 | ≤ 36 | 84 | ≤ 1970 | 148 | ≤ 110252 | 212 | ≤ 6172275 |
| 21 | ≤ 38 | 85 | ≤ 2098 | 149 | ≤ 117409 | 213 | ≤ 6572925 |
| 22 | ≤ 40 | 86 | ≤ 2234 | 150 | ≤ 125030 | 214 | ≤ 6999582 |
| 23 | ≤ 43 | 87 | ≤ 2379 | 151 | ≤ 133146 | 215 | ≤ 7453933 |
| 24 | ≤ 46 | 88 | ≤ 2533 | 152 | ≤ 141789 | 216 | ≤ 7937777 |
| 25 | ≤ 49 | 89 | ≤ 2698 | 153 | ≤ 150992 | 217 | ≤ 8453028 |
| 26 | ≤ 52 | 90 | ≤ 2873 | 154 | ≤ 160793 | 218 | ≤ 9001725 |
| 27 | ≤ 55 | 91 | ≤ 3059 | 155 | ≤ 171231 | 219 | ≤ 9586039 |
| 28 | ≤ 59 | 92 | ≤ 3258 | 156 | ≤ 182345 | 220 | ≤ 10208280 |
| 29 | ≤ 62 | 93 | ≤ 3469 | 157 | ≤ 194182 | 221 | ≤ 10870913 |
| 30 | ≤ 66 | 94 | ≤ 3694 | 158 | ≤ 206786 | 222 | ≤ 11576557 |
| 31 | ≤ 71 | 95 | ≤ 3934 | 159 | ≤ 220209 | 223 | ≤ 12328006 |
| 32 | ≤ 75 | 96 | ≤ 4189 | 160 | ≤ 234503 | 224 | ≤ 13128233 |
| 33 | ≤ 80 | 97 | ≤ 4461 | 161 | ≤ 249725 | 225 | ≤ 13980403 |
| 34 | ≤ 85 | 98 | ≤ 4751 | 162 | ≤ 265935 | 226 | ≤ 14887889 |
| 35 | ≤ 91 | 99 | ≤ 5059 | 163 | ≤ 283197 | 227 | ≤ 15854280 |
| 36 | ≤ 97 | 100 | ≤ 5387 | 164 | ≤ 301579 | 228 | ≤ 16883401 |
| 37 | ≤ 103 | 101 | ≤ 5737 | 165 | ≤ 321155 | 229 | ≤ 17979324 |
| 38 | ≤ 110 | 102 | ≤ 6109 | 166 | ≤ 342002 | 230 | ≤ 19146385 |
| 39 | ≤ 117 | 103 | ≤ 6506 | 167 | ≤ 364202 | 231 | ≤ 20389201 |
| 40 | ≤ 124 | 104 | ≤ 6928 | 168 | ≤ 387842 | 232 | ≤ 21712690 |
| 41 | ≤ 132 | 105 | ≤ 7378 | 169 | ≤ 413018 | 233 | ≤ 23122088 |
| 42 | ≤ 141 | 106 | ≤ 7857 | 170 | ≤ 439827 | 234 | ≤ 24622972 |
| 43 | ≤ 150 | 107 | ≤ 8367 | 171 | ≤ 468377 | 235 | ≤ 26221280 |
| 44 | ≤ 160 | 108 | ≤ 8910 | 172 | ≤ 498780 | 236 | ≤ 27923336 |
| 45 | ≤ 170 | 109 | ≤ 9488 | 173 | ≤ 531156 | 237 | ≤ 29735875 |
| 46 | ≤ 181 | 110 | ≤ 10104 | 174 | ≤ 565634 | 238 | ≤ 31666069 |
| 47 | ≤ 193 | 111 | ≤ 10760 | 175 | ≤ 602350 | 239 | ≤ 33721553 |
| 48 | ≤ 205 | 112 | ≤ 11458 | 176 | ≤ 641449 | 240 | ≤ 35910462 |
| 49 | ≤ 218 | 113 | ≤ 12202 | 177 | ≤ 683087 | 241 | ≤ 38241455 |
| 50 | ≤ 233 | 114 | ≤ 12994 | 178 | ≤ 727427 | 242 | ≤ 40723756 |
| 51 | ≤ 248 | 115 | ≤ 13838 | 179 | ≤ 774645 | 243 | ≤ 43367187 |
| 52 | ≤ 264 | 116 | ≤ 14736 | 180 | ≤ 824928 | 244 | ≤ 46182206 |
| 53 | ≤ 281 | 117 | ≤ 15692 | 181 | ≤ 878475 | 245 | ≤ 49179951 |
| 54 | ≤ 299 | 118 | ≤ 16711 | 182 | ≤ 935498 | 246 | ≤ 52372284 |
| 55 | ≤ 318 | 119 | ≤ 17795 | 183 | ≤ 996222 | 247 | ≤ 55771835 |
| 56 | ≤ 339 | 120 | ≤ 18951 | 184 | ≤ 1060888 | 248 | ≤ 59392055 |
| 57 | ≤ 361 | 121 | ≤ 20181 | 185 | ≤ 1129752 | 249 | ≤ 63247269 |
| 58 | ≤ 384 | 122 | ≤ 21491 | 186 | ≤ 1203085 | 250 | ≤ 67352729 |
| 59 | ≤ 409 | 123 | ≤ 22885 | 187 | ≤ 1281179 | 251 | ≤ 71724679 |
| 60 | ≤ 436 | 124 | ≤ 24371 | 188 | ≤ 1364342 | 252 | ≤ 76380419 |
| 61 | ≤ 464 | 125 | ≤ 25953 | 189 | ≤ 1452903 | 253 | ≤ 81338368 |
| 62 | ≤ 494 | 126 | ≤ 27638 | 190 | ≤ 1547213 | 254 | > 81338368 |
| 63 | ≤ 526 | 127 | ≤ 29431 | 191 | ≤ 1647644 | 255 | Reserved |

In the above Table 1 and Table 2, "Index" may identify the buffer index, and "BS value" may identify a buffer range corresponding to the buffer index. It may be understood that each element in the Table 1, or Table 2 exists independently. The elements are exemplarily listed in the same table, but it does not mean that all the elements in the table must exist at the same time according to the table. A value of each element in the table is independent of the value of any other element in Table 1, or Table 2. Thus those skilled in the art may understand that the value of each element of the Table 1, or Table 2 is an independent embodiment.

In an application scenario, a short BSR is reported when only one logical channel group (LCG) is reporting.

For a regular and periodic BSR, a media access control (MAC) entity shall: if more than one LCG has data available for transmission when the MAC protocol data unit (PDU) containing the BSR is to be built, report a long BSR for all LCGs which have data available for transmission; or report the short BSR.

In communication standards, this may be expressed as:
For Regular and Periodic BSR, the MAC entity shall:
1> if more than one LCG has data available for transmission when the MAC PDU containing the BSR is to be built:
   2> report Long BSR for all LCGs which have data available for transmission.
1> else:
   2> report Short BSR.

In some application scenarios, even if there is only one LCG, the existing short BSR is no longer sufficient to carry the amount of data of the UE. Moreover, even if a long BSR may be reported, due to the large amount of data, the UE needs to report a relatively large buffer index, which also has the problem of being insufficient granularity. In this case, the network device may only roughly issue a grant, which leads to adding a large amount of padding when the UE uploads data. Thus, further enhancement of the XR service needs to be considered.

As shown in FIG. 2, embodiments of the disclosure provide a scheduling method for BSR enhancement. The method is executed by a base station, including the following step S21.

At step S21, configuration information is sent, in which the configuration information indicates a first type of BSR used by a UE for reporting; and the first type of BSR is determined by extension of a second type of BSR.

In an embodiment, the base station may be various types of base stations. For example, the base station may be, but is not limited to, at least one of: a 3G base station, a 4G base station, a 5G base station, and other eNB.

In an embodiment, sending the configuration information at step S21 may be: sending the configuration information to the UE.

In an embodiment, the UE may be various mobile terminals or fixed terminals. For example, the UE may be, but is not limited to, a cell phone, a computer, a server, a wearable device, a vehicle-mounted terminal, a road side unit (RSU), a game control platform, a multimedia device, or the like.

The scheduling method for BSR enhancement executed by the base station in embodiments of the disclosure may also be executed by a network device. The network device may be, but not limited to, a core network device or other access network devices (except for the base station). The core network device or the access network device may be a flexible node arranged flexibly or a function or an entity implementing a function, etc. For example, the core network device may be an access and mobility management function (AMF) or the like.

If scheduling method for BSR enhancement is performed by the core network device, step S21 may be that, the core network device sends the configuration information to the base station, and the base station sends the configuration information to the UE.

The configuration information indicates the first type of BSR used by the UE for reporting. For example, the UE may use the first type of BSR for reporting various data of the XR service.

In this case, the first type of BSR is determined by extension of the second type of BSR.

In an embodiment, the first type of BSR may be a configuration in the table of the first type of BSR.

In an embodiment, the second type of BSR may be a BSR; the first type of BSR may be an extended BSR. For example, the BSR may be a BSR in Table 1 and/or Table 2 of the above embodiments. The BSR may include: a short BSR with a buffer index of 5 bits and/or a long BSR with a buffer index of 8 bits. The first type of BSR may include, but is not limited to: an extended short BSR and/or an extended long BSR.

In an embodiment, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In this case, a buffer range corresponding to the at least one buffer index of the first short BSR is different from a buffer range corresponding to the at least one buffer index of the second short BSR.

In this case, the buffer index may be a buffer index value.

For example, the bits occupied by the buffer index of the first short BSR are extended from 5 bits occupied by the buffer index of the second short BSR to X bits; in which X is an integer greater than 5. For example, the second short BSR has 32 buffer indexes. If X is 6, the first short BSR has 64 buffer indexes.

For example, a buffer range corresponding to the buffer index "0" of the first short BSR is different from a buffer range corresponding to the buffer index "0" of the second short BSR (e.g., the "BS value" of "0" in Table 1 and/or Table 2), and/or a buffer range corresponding to the buffer index "5" of the first short BSR is different from a buffer range corresponding to the buffer index "5" of the second short BSR (e.g., the "BS value" of "5" in Table 1 and/or Table 2), and etc.

In this way, in embodiments of the disclosure, an extended short BSR (i.e., the first type of short BSR) may be obtained by extension of the short BSR (i.e., the second type of short BSR). For example, the short BSR may be extended from the number of bits occupied by the buffer index, and/or the different buffer range corresponding to the buffer index of the short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In this case, a buffer range corresponding to the at least one buffer index of the first long BSR is different from a buffer range corresponding to the at least one buffer index of the second long BSR.

For example, the bits occupied by the buffer index of the first long BSR are extended from 8 bits occupied by the buffer index of the second long BSR to Y bits; in which Y is an integer greater than 8. For example, the second long BSR has 256 buffer indexes. If Y is 6, the first long BSR has 512 buffer indexes.

For example, a buffer range corresponding to the buffer index "0" of the first long BSR is different from a buffer range corresponding to the buffer index "0" of the second long BSR (e.g., the "BS value" of "0" in Table 1 and/or Table 2), and/or a buffer range corresponding to the buffer index "5" of the first long BSR is different from a buffer range corresponding to the buffer index "5" of the second long BSR (e.g., the "BS value" of "5" in Table 1 and/or Table 2), and etc.

In this way, in embodiments of the disclosure, an extended long BSR (i.e., the first type of long BSR) may be obtained by extension of the long BSR (i.e., the second type of long BSR). For example, the long BSR may be extended from the number of bits occupied by the buffer index, and/or from the different buffer range corresponding to the buffer index of the long BSR.

In embodiments of the disclosure, the base station sends the configuration information, in which the configuration information indicates the first type of BSR used by the UE for reporting; and the first type of BSR is determined by extension of the second type of BSR. In this way, the UE may be enabled to use the extended first type of BSR for reporting. And the extended first type of BSR may carry a relatively very large amount of data from the UE. Thus, in the first aspect, the BSR enhancement is realized. In the second aspect, the UE may be enabled to report a relatively large amount of data based on the extended first type of BSR, so as to improve the efficiency of the wireless communication and etc.

For example, if the UE uses the first short BSR extended from the second short BSR for reporting, the UE may be enabled to carry a relatively large amount of data, thus ensuring efficient reporting of the amount of data for the XR service and the like.

For example, if the UE uses the first long BSR extended from the second long BSR for reporting, on one hand, the UE may be enabled to carry a relatively large amount of data; and on the other hand, the buffer range corresponding to the buffer index of the BSR may be changed. This may reduce the problem of insufficient granularity caused by the UE needing a relatively large buffer index, and may improve the granularity and accuracy of the report.

It needs to be noted that those skilled in the art may understand that, the methods provided in embodiments of the disclosure may be performed separately or in combination with some of the methods in embodiments of the disclosure or some of the methods in the related art.

In some embodiments, sending the configuration information at step S21 includes: sending the configuration information via a dedicated signaling, in which the dedicated signaling includes one of: a radio resource control (RRC) signaling, an MAC signaling, or downlink control information (DCI).

As shown in FIG. 3, embodiments of the disclosure provide a scheduling method for BSR enhancement. The method is executed by a base station, including the following step S31.

At step S31, the configuration information is sent via a dedicated signaling, in which the dedicated signaling includes one of: an RRC signaling, an MAC signaling, or DCI.

In an embodiment, sending the configuration information via the dedicated signaling at step S31 may be: sending the dedicated signaling by the base station to the UE, in which the dedicated signaling carries the configuration information.

For example, the base station sends the RRC signaling to the UE, in which the RRC signaling carries the configuration information. Or the base station sends the MAC signaling to the UE, in which the MAC signaling carries the configuration information. Or the base station sends the DCI to the UE, in which the DCI carries the configuration information.

In other embodiments, the dedicated signaling may also be any dedicated signaling that is achievable and is not limited herein.

In embodiments of the disclosure, the base station may send the configuration information to the UE via the dedicated signaling. In this way, two functions (1)-(2) may be realized via the dedicated signaling: (1) realizing the function of the dedicated signaling, such as the DCI sends a paging message and other related messages, and (2) sending the configuration information to the UE that indicates that the UE uses the first type of BSR for reporting. This may improve the utilization of the dedicated signaling and reduce signaling interactions, which may reduce the power consumption of the base station or the UE.

It needs to be noted that those skilled in the art may understand that, the methods provided in embodiments of the disclosure may be performed separately or in combination with some of the methods in embodiments of the disclosure or some of the methods in the related art.

Embodiments of the disclosure provide a scheduling method for BSR enhancement. The method is executed by a base station, including sending the configuration information, in which the configuration information indicates at least one of: the first type of BSR used by the UE for reporting being specific to each UE; the first type of BSR used by the UE for reporting being specific to each LCG; or the first type of BSR used by the UE for reporting being specific to each logical channel (LC).

In some embodiments of the disclosure, the first type of BSR may be the first type of BSR in the embodiments described above, and the configuration information may be the configuration information in the embodiments described above. For example, the first type of BSR includes a first short BSR and/or a first long BSR.

In this case, an LCG may include one or more LCs. In some embodiments of the disclosure, "a plurality of" refers to two or more.

For example, the granularity at which the base station notifies the UE may be based on a granularity of per UE. For example, the base station sends the configuration information to the UE, so as to notify the UE that the UE performing the XR service needs to use the first type of BSR for reporting.

For example, the granularity at which the base station notifies the UE may be based on a granularity of per LCG. For example, the base station sends the configuration information to the UE, so as to notify the UE that the first type of BSR is used by the UE for reporting on a specific LCG or for any LCG.

In this case, the base station may configure the LCG to use the first type of BSR for reporting.

For example, the granularity at which the base station notifies the UE may be based on a granularity per LC. For example, the base station sends the configuration information to the UE, so as to notify the UE that the first type of BSR is used by the UE for reporting on a specific LC or for any LC.

In embodiments of the disclosure, the base station may notify the UE via the configuration information that the first type of BSR is used for reporting based on per UE and/or per LCG and/or per LC. Thus, the UE is capable of using the first type of BSR for reporting under various scenarios.

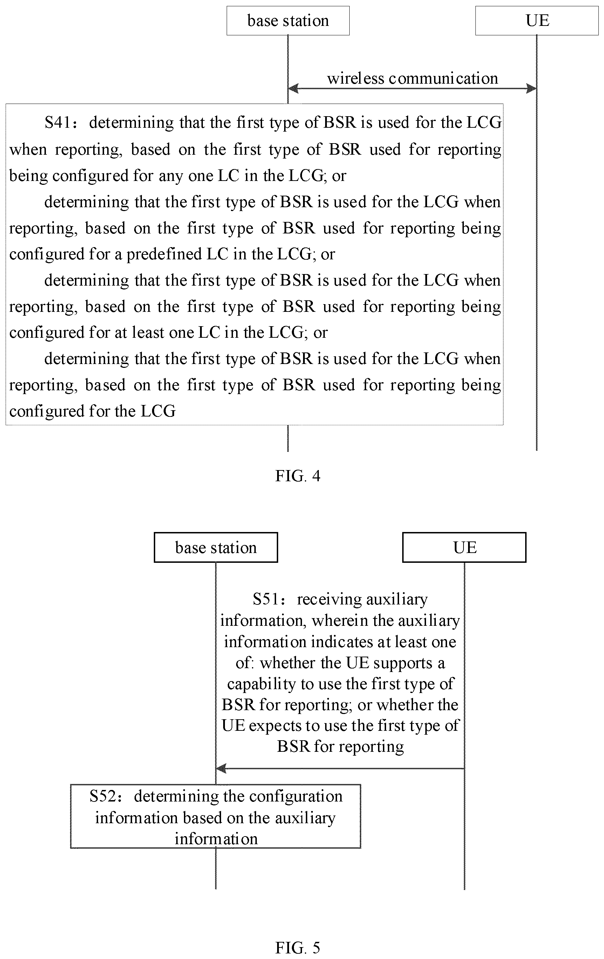

As shown in FIG. 4, embodiments of the disclosure provide a scheduling method for BSR enhancement. The method is executed by a base station, including the following step S41.

At step S41, it is determined that the first type of BSR is used for the LCG when reporting, based on the first type of BSR used for reporting being configured for any one LC in the LCG; or it is determined that the first type of BSR is used for the LCG when reporting, based on the first type of BSR used for reporting being configured for a predefined LC in the LCG; or it is determined that the first type of BSR is used for the LCG when reporting, based on the first type of BSR used for reporting being configured for at least one LC in the LCG; or it is determined that the first type of BSR is used for the LCG when reporting, based on the first type of BSR used for reporting being configured for the LCG.

The step S41 of determining the first type of BSR is used for the LCG when reporting may be: determining the first type of BSR is used for reporting in the BSR configured on the LCG.

In this case, the predefined LC may include one or more LCs.

For example, when the base station configures for the LC, the base station may provide a configuration of the first type of BSR used for reporting to any one LC in the LCG, so as to determine the first type of BSR used for reporting in the BSR configured on the LCG. For example, LCG1 includes three LCs, i.e., LC1, LC2, and LC3. If the base station indicates the first type of BSR is used for the LC1 when reporting, it is determined that all extended BSRs (i.e., the first type of BSR) are used for reporting in the BSR (e.g., the second type of BSR) configured on the LCG1, and/or if the base station indicates the first type of BSR is used for the LC2 when reporting, it is determined that the first type of BSR is used for reporting in the BSR configured on the LCG1, and/or if the base station indicates the first type of BSR is used for the LC3 when reporting, it is determined that the first type of BSR is used for reporting in all the BSRs configured on the LCG1.

For example, when the base station configures for the LC, the base station may provide a configuration of the first type of BSR used for reporting to the predefined LC in the LCG, so as to determine the first type of BSR used for reporting in the BSR configured on the LCG. For example, LCG1 includes three LCs, i.e., LC1, LC2, and LC3. If the base station indicates the first type of BSR is used for the predefined LC (e.g., the LC1) when reporting, it is determined that the first type of BSR are used for reporting in all the BSRs configured on the LCG1.

For example, the base station determines the first type of BSR may be used for reporting in all the BSRs configured on the LCG, by configuring the first type of BSR is used for the LCG.

In this way, in embodiments of the disclosure, the base station may determine the configuration of the first type of BSR used for reporting, for any LC or a plurality of LCs or the predefined LC in the LCG, so as to indicate all BSRs configured on the LCG (e.g., the second type of BSR) may be extended as the first type of BSR for reporting. Thus, a plurality of ways for the base station to determine and indicate the first type of BSR used by the UE for reporting are provided that are specific to the granularity of per LCG.

It needs to be noted that those skilled in the art may understand that, the methods provided in embodiments of the disclosure may be performed separately or in combination with some of the methods in embodiments of the disclosure or some of the methods in the related art.

As shown in FIG. 5, embodiments of the disclosure provide a scheduling method for BSR enhancement. The method is executed by a base station, including the following steps S51 to S52.

At step S51, auxiliary information is received, in which the auxiliary information indicates at least one of: whether the UE supports a capability to use the first type of BSR for reporting; or whether the UE expects to use the first type of BSR for reporting.

At step S52, the configuration information is determined based on the auxiliary information.

In embodiments of the disclosure, the configuration information may be the configuration information in the embodiments described above; the first type of BSR may be the first type of BSR in the embodiments described above.

In an embodiment, receiving the auxiliary information at step S51 may be: receiving the auxiliary information sent by the UE.

For example, if the UE determines that the service (e.g., the XR service) has a relatively large amount of data, the UE may report the auxiliary information to the base station, in which the auxiliary information indicates that the UE expects to use the first type of BSR for reporting. The base station may then determine the first type of BSR used by the UE for reporting based on the auxiliary information, and send the configuration information to the UE, indicating the first type of BSR used by the UE for reporting.

For example, if the UE reports auxiliary information that supports a capability to use the first type of BSR for reporting; the base station determines the first type of BSR used by the UE for reporting based on the auxiliary information, and sends the configuration information to the UE, indicating the first type of BSR used by the UE for reporting.

For example, if the UE reports auxiliary information that does not support the capability to use the first type of BSR for reporting; the base station determines the first type of BSR is not used by the UE for reporting based on the auxiliary information, and sends reject indication information to the UE, indicating the first type of BSR is not used by the UE for reporting, or does not send the configuration information to the UE.

In embodiments of the disclosure, the base station may receive the auxiliary information sent by the UE, and determine the configuration information based on the auxiliary information. In this way, the configuration information determined by the base station may be caused to better align with the capabilities and/or requirements supported by the UE, thus improving communication quality.

In some embodiments, step S51 includes: receiving the configuration information via a dedicated signaling.

Embodiments of the disclosure provide a scheduling method for BSR enhancement, executed by a base station, including: receiving the auxiliary information via the dedicated signaling.

In an embodiment, receiving the auxiliary information via the dedicated signaling by the base station may be: receiving the auxiliary information sent by the UE via the dedicated signaling by the base station.

In this case, the dedicated signaling may be an RRC signaling or any other realizable signaling, which is not limited herein.

In embodiments of the disclosure, the base station may receive the auxiliary information sent by the UE via the dedicated signaling. In this way, two functions (1)-(2) may be realized via the dedicated signaling: (1) realizing the function of the dedicated signaling and (2) realizing the function of reporting the auxiliary information. This may improve the utilization of the dedicated signaling and reduce signaling interactions, which may reduce the power consumption of the base station or the UE.

It needs to be noted that those skilled in the art may understand that, the methods provided in embodiments of the disclosure may be performed separately or in combination with some of the methods in embodiments of the disclosure or some of the methods in the related art.

A scheduling method for BSR enhancement as described below, which is executed by a UE, is analogous to the description of the scheduling method for BSR enhancement executed by the network device as described above. For technical details not disclosed in the embodiment of the scheduling method for BSR enhancement executed by the UE, please refer to the description of the examples of the scheduling method for BSR enhancement executed by the network device, which are not described and illustrated in detail herein.

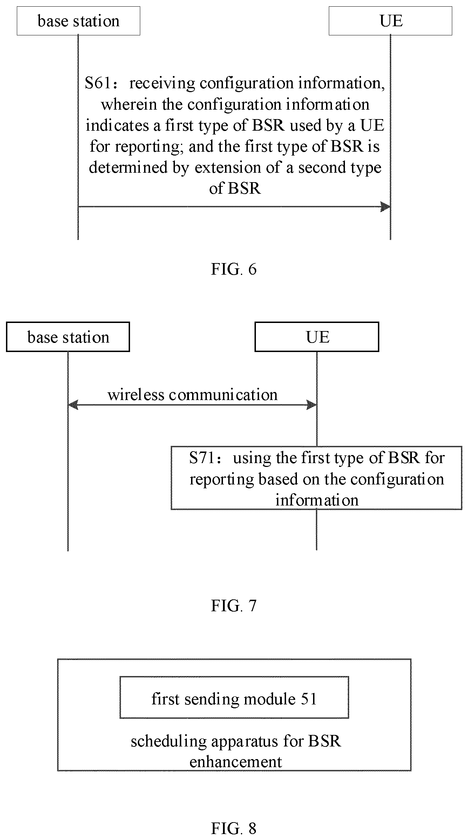

As shown in FIG. 6, embodiments of the disclosure provide a scheduling method for BSR enhancement. The method is executed by a UE, including the following step S61.

At step S61, configuration information is received, in which the configuration information indicates a first type of BSR used by the UE for reporting; and the first type of BSR is determined by extension of a second type of BSR.

In an embodiment, receiving the configuration information at step S61 may be receiving the configuration information sent by a base station or a core network device.

In some embodiments of the disclosure, the configuration information may be the configuration information in the embodiments described above; the first type of BSR may be the first type of BSR in the embodiments described above; and the second type of BSR may be the second type of BSR in the embodiments described above.

For example, the second type of BSR may be a BSR in Table 1 and/or Table 2. The second type of BSR includes a second short BSR (e.g., a short BSR in Table 1) and/or a second long BSR (e.g., a long BSR in Table 2).

For example, the first type of BSR is determined by extension of the second type of BSR; the first type of BSR is an extended BSR. The first type of BSR may be a configuration in the table of the first type of BSR.

For example, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

For example, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

For example, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

In some embodiments, receiving the configuration information at step S61 includes: receiving the configuration information via a dedicated signaling, in which the dedicated signaling includes one of: an RRC signaling, an MAC signaling, or DCI.

Embodiments of the disclosure provide a scheduling method for BSR enhancement. The method is executed by the UE, including: receiving the configuration information via the dedicated signaling, in which the dedicated signaling includes one of: an RRC signaling, an MAC signaling, or DCI.

In an embodiment, receiving the configuration information via the dedicated signaling by the UE may be: receiving the dedicated signaling by the UE via the dedicated signaling sent by the base station or the core network device.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

The above embodiments may be described in detail on the network device side, which are not repeated herein.

As shown in FIG. 7, embodiments of the disclosure provide a scheduling method for BSR enhancement. The method is executed by a UE, including the following step S71.

At step S71, the first type of BSR is used for reporting based on the configuration information.

In some embodiments, step S71 includes one of: determining that the first type of BSR is used based on each UE for reporting, based on the configuration information; determining that the first type of BSR is used based on each LCG for reporting, based on the configuration information; or determining that the first type of BSR is used based on each LC for reporting, based on the configuration information.

Embodiments of the disclosure provide a scheduling method for BSR enhancement. The method is executed by the UE, including: determining that the first type of BSR is used based on each UE for reporting based on the configuration information; determining that the first type of BSR is used based on each LCG for reporting based on the configuration information; or determining that the first type of BSR is used based on each LC for reporting based on the configuration information.

For example, the UE receives the configuration information sent by the base station. If the UE determines that the configuration information indicates the first type of BSR used by the UE for reporting is specific to each UE, the UE determines that the first type of BSR is used based on each UE for reporting. And/or, if the UE determines that the configuration information indicates the first type of BSR used by the UE for reporting is specific to each LCG (e.g., a predefined LCG), the UE determines that that the first type of BSR is used based on each LCG (e.g., the predefined LCG) for reporting. And/or, if the UE determines that the configuration information indicates the first type of BSR used by the UE for reporting is specific to each LC (e.g., a predefined LC), the UE determines that that the first type of BSR is used based on each LC (e.g., the predefined LC) for reporting.

In some embodiments, determining that the first type of BSR is used based on each LCG for reporting based on the configuration information includes one of: determining that the first type of BSR is used for the LCG when reporting, based on an indication of the configuration information that the first type of BSR used for reporting is configured by a base station for any one LC in the LCG; determining that the first type of BSR is used for the LCG when reporting, based on an indication of the configuration information that the first type of BSR used for reporting is configured by the base station for a predefined LC in the LCG; or determining that the first type of BSR is used for the LCG when reporting, based on an indication of the configuration information that the first type of BSR used for reporting is configured by the base station for at least one LC in the LCG.

Embodiments of the disclosure provide a scheduling method for BSR enhancement. The method is executed by the UE, including: determining that the first type of BSR is used for the LCG when reporting, based on the indication of the configuration information that the first type of BSR used for reporting is configured by the base station for any one LC in the LCG; determining that the first type of BSR is used for the LCG when reporting, based on the indication of the configuration information that the first type of BSR used for reporting is configured by the base station for the predefined LC in the LCG; or determining that the first type of BSR is used for the LCG when reporting, based on the indication of the configuration information that the first type of BSR used for reporting is configured by the base station for at least one LC in the LCG.

In this case, determining that the first type of BSR is used for the LCG when reporting may be: determining that the first type of BSR for reporting is used in a BSR configured on the LCG.

Embodiments of the disclosure provide a scheduling method for BSR enhancement. The method is executed by the UE, including: sending auxiliary information, in which the auxiliary information is used for a base station to determine the configuration information, and the auxiliary information includes at least one of: whether the UE supports a capability to use the first type of BSR for reporting; or whether the UE expects to use the first type of BSR for reporting.

In an embodiment, sending the auxiliary information includes: sending the auxiliary information to the base station.

In an embodiment, sending the auxiliary information, including: sending the auxiliary information via the dedicated signaling.

The above embodiments may be described in detail on the network device side, which are not repeated herein.

It needs to be noted that those skilled in the art may understand that, the methods provided in embodiments of the disclosure may be performed separately or in combination with some of the methods in embodiments of the disclosure or some of the methods in the related art.

In order to further explain embodiments of the disclosure, a specific embodiment is provided below.

Embodiments of the disclosure provide a scheduling method for BSR enhancement, executed by a communication device. The communication device includes a network device and a UE. The scheduling method for BSR enhancement includes the following steps S81 to S82.

At step S81, the base station sends configuration information to the UE, in which the configuration information indicates a first type of BSR used by a UE for reporting.

In this case, the first type of BSR is determined by extension of the second type of BSR. The second type of BSR is a BSR; and the first type of BSR is an extended BSR.

In an optional embodiment, the first type of BSR includes a first short BSR and/or a first long BSR. In this case, the first short BSR is an extended short BSR; the second long BSR is an extended long BSR.

For example, the bits occupied by the buffer index of the first short BSR are extended from 5 bits occupied by the buffer index of the second short BSR to X bits; in which X is an integer greater than 5. For example, the second short BSR has 32 buffer indexes. If X is 6, the first short BSR has 64 buffer indexes. Alternatively, the buffer index of the first short BSR is the same as the buffer index of the second short BSR, but a buffer range corresponding to the buffer index of the first short BSR is different from the buffer range of the second short BSR. For example, a buffer range corresponding to the buffer index "0" of the first short BSR is different from a buffer range corresponding to the buffer index "0" of the second short BSR.

For example, the bits occupied by the buffer index of the first long BSR are extended from 8 bits occupied by the buffer index of the second long BSR to Y bits; in which Y is an integer greater than 8. For example, the second long BSR has 256 buffer indexes. If Y is 6, the first long BSR has 512 buffer indexes. Alternatively, the buffer index of the first long BSR is the same as the buffer index of the second long BSR, but a buffer range corresponding to the buffer index of the first long BSR (i.e., a buffer range corresponding to the buffer index) is different from a buffer range of the second long BSR. For example, a buffer range corresponding to the buffer index "0" of the first long BSR is different from a buffer range corresponding to the buffer index "0" of the second long BSR.

In an optional embodiment, the configuration information indicates at least one of: the first type of BSR used by the UE for reporting being specific to each UE; the first type of BSR used by the UE for reporting being specific to each LCG; or the first type of BSR used by the UE for reporting being specific to each LC.

In a first case, the granularity at which the base station notifies the UE is based on a granularity of per UE. For example, if the base station is aware that the UE is a UE that performs an XR service, the base station indicates the extended BSR (i.e., the second type of BSR) for reporting is applied/used in a BSR configured on the UE.

In a second case, the granularity at which the base station notifies the UE may be based on a granularity of per LCG. For example, if the base station is aware that the UE is a UE that performs an XR service, the base station indicates the first type of BSR for reporting is applied in a BSR configured on a specific LCG or on any LCG.

In a third case, the granularity at which the base station notifies the UE may be based on a granularity of per LC. For example, if the base station is aware that the UE is a UE that performs an XR service, the base station indicates the first type of BSR for reporting is applied in a BSR configured on a specific LC or on any LC.

The second case may further include at least one of the following fourth case to the sixth case.

In a fourth case, when the base station configures for the LC, the base station indicates the first type of BSR for reporting is applied in the BSR configured on the LCG, by indicating the first type of BSR is used for reporting on the specific LC in the LCG.

In a fifth case, when the base station configures for the LC, the base station indicates the first type of BSR for reporting is applied in the BSR configured on the LCG, by indicating the first type of BSR is used for reporting on any LC or a plurality of LCs in the LCG.

In a sixth case, when the base station configures for the LC, the base station indicates the first type of BSR for reporting is applied in the BSR configured on the LCG, by indicating the first type of BSR is used for reporting on the LCG.

The third case may further include the following seventh case.

In a seventh case, when the base station configures for the LC, the base station indicates the first type of BSR for reporting is applied in the BSR configured on the LC, by indicating the first type of BSR is used for reporting on the LC.

At step S82, the UE determines to use the first type of BSR for reporting based on the configuration information.

In an optional embodiment, before step S81, the method includes step S80A and/or step S80B.

At step S80A, the UE sends the auxiliary information, in which the auxiliary information includes at least one of: whether the UE supports a capability to use the first type of BSR for reporting; or whether the UE expects to use the first type of BSR for reporting.

At step S80B, the base station determines configuration information based on the auxiliary information.

It needs to be noted that those skilled in the art may understand that, the methods provided in embodiments of the disclosure may be performed separately or in combination with some of the methods in embodiments of the disclosure or some of the methods in the related art.

As shown in FIG. 8, embodiments of the disclosure provide a scheduling apparatus for BSR enhancement. The apparatus includes a first sending module 51.

The first sending module 51 is configured to send configuration information, in which the configuration information indicates a first type of BSR used by a UE for reporting; and the first type of BSR is determined by extension of a second type of BSR.

The scheduling apparatus for BSR enhancement provided in embodiments of the disclosure includes: a network device.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

Embodiments of the disclosure provide a scheduling apparatus for BSR enhancement. The apparatus includes the first sending module 51, configured to send the configuration information via a dedicated signaling, in which the dedicated signaling includes one of: an RRC signaling, an MAC signaling, or DCI.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

Embodiments of the disclosure provide a scheduling apparatus for BSR enhancement. The apparatus includes a first processing module, configured to perform one of: determining that the first type of BSR is used for the LCG when reporting, based on the first type of BSR used for reporting being configured for any one LC in the LCG; determining that the first type of BSR is used for the LCG when reporting, based on the first type of BSR used for reporting being configured for a predefined LC in the LCG; determining that the first type of BSR is used for the LCG when reporting, based on the first type of BSR used for reporting being configured for at least one LC in the LCG; or determining that the first type of BSR is used for the LCG when reporting, based on the first type of BSR used for reporting being configured for the LCG.

Embodiments of the disclosure provide a scheduling apparatus for BSR enhancement. The apparatus includes a first receiving module, configured to: receive auxiliary information, in which the auxiliary information indicates at least one of: whether the UE supports a capability to use the first type of BSR for reporting; or whether the UE expects to use the first type of BSR for reporting; and the first processing module, configured to determine the configuration information based on the auxiliary information.

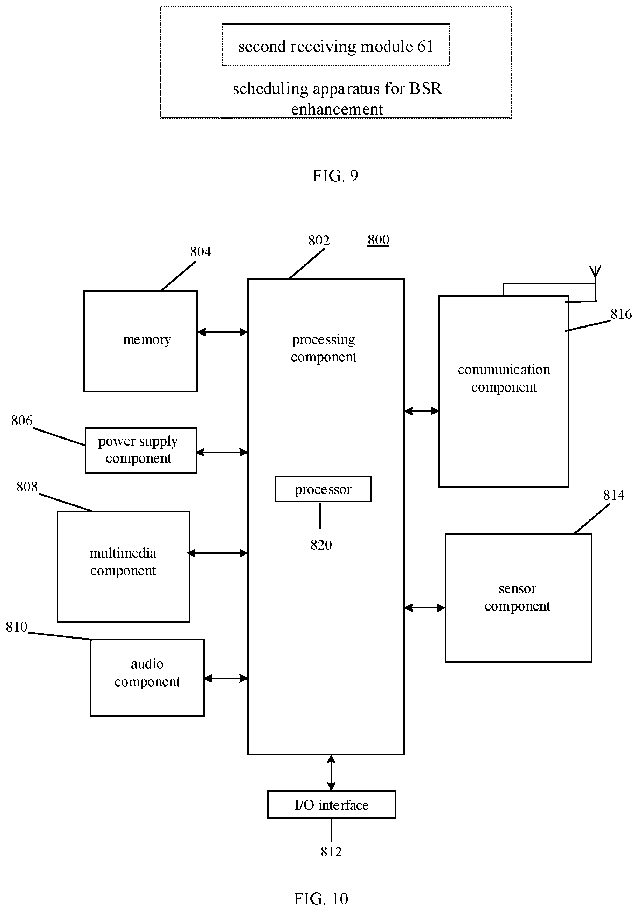

As shown in FIG. 9, embodiments of the disclosure provide a scheduling apparatus for BSR enhancement. The apparatus includes a second receiving module 61.

The second receiving module 61 is configured to receive configuration information, in which the configuration information indicates a first type of BSR used by a UE for reporting; and the first type of BSR is determined by extension of a second type of BSR.

The scheduling apparatus for BSR enhancement provided in embodiments of the disclosure includes: a UE.

Embodiments of the disclosure provide a scheduling apparatus for BSR enhancement. The apparatus includes a second processing module, configured to use the first type of BSR for reporting based on the configuration information.

In some embodiments, the first type of BSR includes at least one of: a first short BSR, in which the first short BSR is determined based on extension of a second short BSR in the second type of BSR; or a first long BSR, in which the first long BSR is determined based on extension of a second long BSR in the second type of BSR.

In some embodiments, a buffer index of the first short BSR occupies a first number of bits, a buffer index of the second short BSR occupies a second number of bits, the first number of bits is greater than the second number of bits, and/or; a buffer range corresponding to the buffer index of the first short BSR is different from a buffer range corresponding to the buffer index of the second short BSR.

In some embodiments, a buffer index of the first long BSR occupies a third number of bits, a buffer index of the second long BSR occupies a fourth number of bits, the third number of bits is greater than the fourth number of bits, and/or; a buffer range corresponding to the buffer index of the first long BSR is different from a buffer range corresponding to the buffer index of the second long BSR.

Embodiments of the disclosure provide a scheduling apparatus for BSR enhancement. The apparatus includes the second receiving module 61, configured to receive the configuration information via a dedicated signaling, in which the dedicated signaling includes one of: an RRC signaling, an MAC signaling, or DCI.

In some embodiments, the configuration information indicates at least one of: the first type of BSR used by the UE for reporting being specific to each UE; the first type of BSR used by the UE for reporting being specific to each LCG; or the first type of BSR used by the UE for reporting being specific to each LC.

Embodiments of the disclosure provide a scheduling apparatus for BSR enhancement. The apparatus includes the second processing module, configured to perform one of: determining that the first type of BSR is used based on each UE for reporting, based on the configuration information; determining that the first type of BSR is used based on each LCG for reporting, based on the configuration information; or determining that the first type of BSR is used based on each LC for reporting, based on the configuration information.

Embodiments of the disclosure provide a scheduling apparatus for BSR enhancement. The apparatus includes the second processing module, configured to perform one of: determining that the first type of BSR is used for the LCG when reporting, based on an indication of the configuration information that the first type of BSR used for reporting is configured by a base station for any one LC in the LCG; determining that the first type of BSR is used for the LCG when reporting, based on an indication of the configuration information that the first type of BSR used for reporting is configured by the base station for a predefined LC in the LCG; or determining that the first type of BSR is used for the LCG when reporting, based on an indication of the configuration information that the first type of BSR used for reporting is configured by the base station for at least one LC in the LCG.

Embodiments of the disclosure provide a scheduling apparatus for BSR enhancement. The apparatus includes a second sending module, configured to send auxiliary information, in which the auxiliary information is used for a base station to determine the configuration information, and the auxiliary information includes at least one of: whether the UE supports a capability to use the first type of BSR for reporting; or whether the UE expects to use the first type of BSR for reporting.

It needs to be noted that those skilled in the art may understand that, the methods provided in embodiments of the disclosure may be performed separately or in combination with some of the methods in embodiments of the disclosure or some of the methods in the related art.

Regarding the apparatus in the above embodiments, the specific manner in which each module performs an operation has been described in detail in the embodiments relating to the method, which will not be described in detail herein.

Embodiment of the disclosure provide a communication device. The communication device includes: a processor; and a memory storing instructions executable by the processor; in which the processor is configured to execute the executable instructions to implement a scheduling method for BSR enhancement in any embodiment of the disclosure.

In an embodiment, the communication device may include, but is not limited to, at least one of: a UE and a network device. The network device includes a base station.

The processor may include various types of storage media that are non-transitory computer storage media capable of continuing to memorize information stored thereon after the UE is powered down.

The processor may be connected to the memory through a bus or the like for reading an executable program stored on the memory, e.g., at least one of the methods shown in FIG. 2 to FIG. 7.

Embodiment of the disclosure also provide a computer storage medium. The computer storage medium stores a computer-executable program which, when executed by a processor, implements a scheduling method for BSR enhancement in any embodiment of the disclosure, e.g., at least one of the methods shown in FIG. 2 to FIG. 7.

Regarding the device or the storage medium in the above embodiments, the specific manner in which each module performs an operation has been described in detail in the embodiments relating to the method, which will not be described in detail herein.

FIG. 10 is a block diagram illustrating a UE 800 according to an example embodiment. For example, the UE 800 may be a mobile phone, a computer, a digital broadcasting terminal, a message transceiver device, a gaming console, a tablet device, a medical device, a fitness device, a personal digital assistant, etc.

Referring to FIG. 10, the UE 800 may include one or more of the following components: a processing component 802, a memory 804, a power supply component 806, a multimedia component 808, an audio component 810, an input/output interface (I/O) 812, a sensor component 814, and a communication component 816.

The processing component 802 generally controls the overall operations of the UE 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the UE 800. Examples of such data include instructions for any application or method operated on the UE 800, contact data, phone book data, messages, pictures, videos, etc. The memory 804 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 806 provides power to the various components of the UE 800. The power supply component 806 may include a power management system, one or more power supplies, and other components associated with generating, managing, and distributing power for the UE 800.

The multimedia component 808 includes a screen providing an output interface between the UE 800 and a user. In some embodiments, the screen may include a liquid crystal display (LCD) and a touch panel (TP). In the case that the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and pressure associated with the touch or swipe operation. In some embodiments, the multimedia component 808 includes a front-facing camera and/or a rear-facing camera. The front camera and/or the rear camera may receive external multimedia data when the UE 800 is in an operating mode, such as a shooting mode or a video mode. Each of the front camera and the rear camera may be a fixed optical lens system or has a focal length and optical zoom capability.

The audio component 810 is configured to output and/or input audio signals. For example, the audio component 810 includes a microphone (MIC) that is configured to receive external audio signals when the UE 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/ O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the UE 800. For example, the sensor component 814 may detect an open/closed state of the UE 800, the relative positioning of components (such as the display and keypad of the UE 800), the sensor component 814 may also detect a change in the position of the UE 800 or a component of the UE 800, a presence or absence of user contact with the UE 800, an orientation of the UE 800 or an acceleration/deceleration of the UE 800, and a temperature change of the UE 800. The sensor component 814 may include a proximity sensor configured to detect the presence of a nearby object in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the UE 800 and other devices by wired or wireless means. The UE 800 may access a wireless network based on a communication standard, such as Wi-Fi, 4G or 5G, or their combination. In an exemplary embodiment, the communication component 816 receives broadcast signals or broadcast-related information from an external broadcast management system in a broadcast channel. In an exemplary embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the UE 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the UE 800 for accomplishing the above-described method. For example, the non-transitory computer-readable storage medium may be a ROM, a random access memory (RAM), a CD-ROM, a magnetic tape, floppy disks, and optical data storage devices, etc.

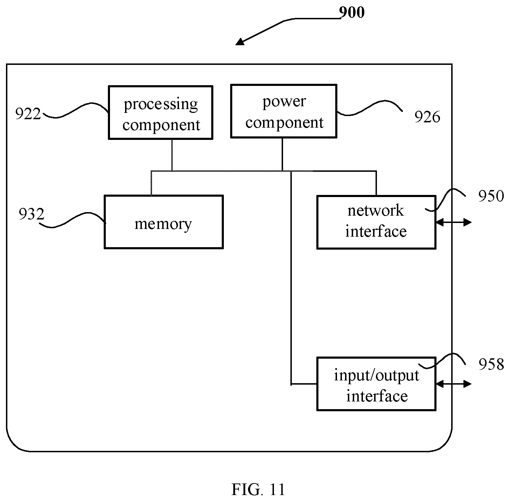

Referring to FIG. 11, an embodiment of the disclosure shows a structure of a base station. For example, the base station 900 may be provided as a network side device. Referring to FIG. 11, the base station 900 includes a processing component 922, which further includes one or more processors, and a memory resource represented by a memory 932 for storing instructions that may be executed by the processing component 922, such as an application program. The application program stored in memory 932 may include one or more modules each corresponding to a set of instructions. Alternatively, the processing component 922 is configured to execute the instructions to perform any of the methods applied to the base station as described in the foregoing method.

The base station 900 may also include a power component 926 configured to perform power management of the base station 900, a wired or wireless network interface 950 configured to connect the base station 900 to a network, and an input/output (I/O) interface 958. The base station 900 may operate an operating system based on the operating system stored in the memory 932, such as Windows Server ^{™}, Mac OS X^{™}, Unix^{™}, Linux^{™}, FreeBSD^{™}, or the like.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A scheduling method for buffer status report (BSR) enhancement, executed by a base station, comprising:
sending configuration information, wherein the configuration information indicates a first type of BSR used by a user equipment (UE) for reporting; and the first type of BSR is determined by extension of a second type of BSR.

2. The method according to claim 1, wherein the first type of BSR comprises at least one of:
a first short BSR, wherein the first short BSR is determined based on extension of a second short BSR in the second type of BSR; or
a first long BSR, wherein the first long BSR is determined based on extension of a second long BSR in the second type of BSR.

3. The method according to claim 2, wherein a buffer index of the first short BSR occupies a first number of bits, a buffer index of the second short BSR occupies a second number of bits,
wherein the first number of bits is greater than the second number of bits, and/or a buffer range corresponding to the buffer index of the first short BSR is different from a buffer range corresponding to the buffer index of the second short BSR.

4. The method according to claim 2, wherein a buffer index of the first long BSR occupies a third number of bits, a buffer index of the second long BSR occupies a fourth number of bits,
wherein the third number of bits is greater than the fourth number of bits, and/or a buffer range corresponding to the buffer index of the first long BSR is different from a buffer range corresponding to the buffer index of the second long BSR.

5. The method according to claim 1, wherein sending the configuration information comprises:
sending the configuration information via a dedicated signaling, wherein the dedicated signaling comprises one of: a radio resource control (RRC) signaling, a media access control (MAC) signaling, or downlink control information (DCI).

6. The method according to any one of claims 1 to 5, wherein the configuration information indicates at least one of:
the first type of BSR used by the UE for reporting being specific to each UE;
the first type of BSR used by the UE for reporting being specific to each logical channel group (LCG); or
the first type of BSR used by the UE for reporting being specific to each logical channel (LC).

7. The method according to claim 6, comprising one of:
determining that the first type of BSR is used for the LCG when reporting, based on the first type of BSR used for reporting being configured for any one LC in the LCG;
determining that the first type of BSR is used for the LCG when reporting, based on the first type of BSR used for reporting being configured for a predefined LC in the LCG;
determining that the first type of BSR is used for the LCG when reporting, based on the first type of BSR used for reporting being configured for at least one LC in the LCG; or
determining that the first type of BSR is used for the LCG when reporting, based on the first type of BSR used for reporting being configured for the LCG.

8. The method according to any one of claims 1 to 5, comprising:
receiving auxiliary information, wherein the auxiliary information indicates at least one of: whether the UE supports a capability to use the first type of BSR for reporting; or whether the UE expects to use the first type of BSR for reporting; and
determining the configuration information based on the auxiliary information.

9. A scheduling method for buffer status report (BSR) enhancement, executed by a user equipment (UE), comprising:
receiving configuration information, wherein the configuration information indicates a first type of BSR used by the UE for reporting; and the first type of BSR is determined by extension of a second type of BSR.

10. The method according to claim 10, comprising:
using the first type of BSR for reporting based on the configuration information.

11. The method according to claim 9, wherein the first type of BSR comprises at least one of:
a first short BSR, wherein the first short BSR is determined based on extension of a second short BSR in the second type of BSR; or
a first long BSR, wherein the first long BSR is determined based on extension of a second long BSR in the second type of BSR.

12. The method according to claim 11, wherein a buffer index of the first short BSR occupies a first number of bits, a buffer index of the second short BSR occupies a second number of bits,
wherein the first number of bits is greater than the second number of bits, and/or a buffer range corresponding to the buffer index of the first short BSR is different from a buffer range corresponding to the buffer index of the second short BSR.

13. The method according to claim 11, wherein a buffer index of the first long BSR occupies a third number of bits, a buffer index of the second long BSR occupies a fourth number of bits,
wherein the third number of bits is greater than the fourth number of bits, and/or a buffer range corresponding to the buffer index of the first long BSR is different from a buffer range corresponding to the buffer index of the second long BSR.

14. The method according to claim 9, wherein receiving the configuration information comprises:
receiving the configuration information via a dedicated signaling, wherein the dedicated signaling comprises one of: a radio resource control (RRC) signaling, a media access control (MAC) signaling, or downlink control information (DCI).

15. The method according to any one of claims 9 to 14, wherein the configuration information indicates at least one of:
the first type of BSR used by the UE for reporting being specific to each UE;
the first type of BSR used by the UE for reporting being specific to each logical channel group (LCG); or
the first type of BSR used by the UE for reporting being specific to each logical channel (LC).

16. The method according to claim 10, wherein using the first type of BSR for reporting based on the configuration information comprises one of:
determining that the first type of BSR is used based on each UE for reporting, based on the configuration information;
determining that the first type of BSR is used based on each LCG for reporting, based on the configuration information; or
determining that the first type of BSR is used based on each LC for reporting, based on the configuration information.

17. The method according to claim 16, wherein determining that the first type of BSR is used based on each LCG for reporting, based on the configuration information comprises one of:
determining that the first type of BSR is used for the LCG when reporting, based on an indication of the configuration information that the first type of BSR used for reporting is configured by a base station for any one LC in the LCG;
determining that the first type of BSR is used for the LCG when reporting, based on an indication of the configuration information that the first type of BSR used for reporting is configured by the base station for a predefined LC in the LCG;
determining that the first type of BSR is used for the LCG when reporting, based on an indication of the configuration information that the first type of BSR used for reporting is configured by the base station for at least one LC in the LCG; or
determining that the first type of BSR is used for the LCG when reporting, based on an indication of the configuration information that the first type of BSR used for reporting is configured by the base station for each LC in the LCG.

18. The method according to any one of claims 9 to 14, comprising:
sending auxiliary information, wherein the auxiliary information is used for a base station to determine the configuration information, and the auxiliary information comprises at least one of:
whether the UE supports a capability to use the first type of BSR for reporting; or
whether the UE expects to use the first type of BSR for reporting.

19. A scheduling apparatus for buffer status report (BSR) enhancement, comprising:
a first sending module, configured to send configuration information, wherein the configuration information indicates a first type of BSR used by a user equipment (UE) for reporting; and the first type of BSR is determined by extension of a second type of BSR.

20. A scheduling apparatus for buffer status report (BSR) enhancement, comprising:
a second receiving module, configured to receive configuration information, wherein the configuration information indicates a first type of BSR used by a user equipment (UE) for reporting; and the first type of BSR is determined by extension of a second type of BSR.

21. A communication device, comprising:
a processor; and
a memory storing instructions executable by the processor;
wherein the processor is configured to execute the executable instructions to implement a scheduling method for buffer status report (BSR) enhancement of any one of claims 1 to 8 or any one of claims 9 to 18.

22. A computer storage medium, storing a computer-executable program which, when executed by a processor, implements a scheduling method for buffer status report (BSR) enhancement of any one of claims 1 to 8 or any one of claims 9 to 18.
